# EUROPEAN PATENT APPLICATION

(11) **EP 4 674 256 A1**
(43) Date of publication of application: **07.01.2026**
(21) Application number: 24186772.0
(22) Date of filing: 05.07.2024
(51) Int. Cl.: A01G 23/091

(54) **ARRANGEMENT, DEVICE, FELLING HEAD AND FORESTRY VEHICLE WITH A LUBRICATION SYSTEM**

(71) Applicant: Deere & Company, Moline, IL 61265 (US)
(72) Inventor: Alfthan, Arto, Mannheim (DE); Herranen, Mika, Mannheim (DE)
(74) Representative: Reichert, Christian

(57) **Abstract**

The invention is an arrangement for lubrication adapted for use on a harvester head (14) with a forestry vehicle (10), comprising a saw unit having a movable saw blade (46) and a lubrication pump (74), the pump (74) having a fixed outlet diameter, the lubrication pump (74) adapted to supply lubrication proportional to a movement angle of the saw bar (78), so that lubrication is supplied when the saw bar (78) is moving outwards, the arrangement further comprising a control valve (70) in a lubrication supply line (72) between the lubrication pump outlet and the saw bar (78), the control valve (70) adapted to be controlled by an operator from a control surface (18) on the forestry vehicle (10).

## Description

The present invention is an arrangement, device, felling head and forestry vehicle with a lubrication system.

Mobile work machines, in particular, forestry equipment and forestry machines, e.g. harvesters and forwarders, have an articulated boom and a tree stem processing tool at the tip of the boom. The tool can be e.g. a harvester head, a felling head, a harvesting and processing head, or a log grapple equipped with a sawing apparatus. The tool can be used e.g. to cut standing trees, to process felled trees or to grab objects, such as logs or tree stems. When using such a tool with power-driven operations, it is operated under the control of an operator of the work machine.

The mobile work machines comprise an articulated boom assembly with the tool attached to a boom tip of the boom assembly. Such tools handle heavy load, that may comprise a load of soil or logs or raw material. Usually, such booms are controlled by hydraulic actuators that are driven by hydraulic pressure from one or more pumps. The pumps are usually powered by the primary power source of the vehicle.

In the process of cutting or felling trees and further separating these into logs, the saw blade, which is integrated in the harvester head is moved out from a parking position and driven into the wood under force to provide the cutting work. During the application the saw is exposed to pressure on the chain and to increasing heat. Saw dust produced by the cutting process is accumulated on the saw unit. The environment requires constant lubrication, to reduce wear on the chain, saw bar and to reduce temperature strain on the saw unit.

It is an established method to provide the saw unit with a hydraulically driven actuator which moves out the saw from a reclined position inside the harvester head. At the same time the actuator uses a hollow cylinder arrangement to pump lubrication onto the saw blade and the chain. This arrangement provides lubrication fluid depending on the travel of the actuator.

As the harvester head is used in multiple different weather and temperature conditions, the lubrication has to be adapted to the different environments.

The present invention solves this problem and provides a highly flexible lubrication arrangement.

The invention is an arrangement for lubrication adapted for use on a harvester head with a forestry vehicle, comprising a saw unit having a movable saw blade and a lubrication pump, the pump having a fixed outlet diameter, the lubrication pump adapted to supply lubrication proportional to a movement angle of the saw blade, so that lubrication is supplied when the saw blade is moving outwards, the arrangement further comprising a control valve in a lubrication supply line between the lubrication pump outlet and the saw blade, the control valve adapted to be controlled by an operator from a control surface on the forestry vehicle.

The lubrication can be maximized without any work effort of changing the pump diameter. Without the invention this requires a complete disassembly of the saw box, the pump and reinstalling a different pump with a different diameter or length to influence the pump volume. The invention enables a general solution and further allows to adjust an accurate volume and flow of lubrication by using a control surface inside the operator cabin.

In another embodiment of the invention the saw unit can comprise an inlet valve between a lubrication tank and the lubrication pump and an outlet valve between the lubrication pump and the control valve.

The valves can enable an accurate flow and safety of spilling lubrication fluid to the environment. Via the valves a timely flow and speed is ensured.

In another embodiment the control valve can be adapted to allow reflow of lubricant to the tank or flow to the saw blade.

In case the selected flow rate of the control valve is lower than the actual pump performance, any overflow is redirect to the circuit without spillage or loss of pressure.

In another embodiment the arrangement can comprise a piston rod adapted to pump lubrication into the supply line, proportional to the movement of the saw blade.

The arrangement can allow a principal pump work when the saw is extended. Yet, the pup is dimensioned so that the flow and volume is sufficient for the worst case scenario, being either at low temperature or high temperature or a large cut diameter.

In another embodiment the arrangement can be adapted to use a swivel motor to move the saw blade.

The swivel motor together with the arrangement can ensure a timely extension of the saw and at the same time to supply the lubrication fluid to the saw bar and the chain. At the same time the motor is supplied with lubrication, so that the pump can be dimensioned to sufficiently support all components with adequate lubrication.

Another invention is a device for lubrication, adapted to be used on a saw unit of a forestry vehicle, comprising a saw lubrication supply line with a control valve, a control line adapted to be used with a control surface of the forestry vehicle, so that the flow of lubrication to the saw blade is adjustable by a vehicle operator.

The lubrication of the saw unit is easily adaptable for different conditions. The maintenance of the saw unit and any changes to amend the flow of lubrication is reduced.

Another invention is a harvester head adapted to be used with or on a forestry vehicle, comprising a saw lubrication supply line with a control valve, a control line adapted to be used with a control surface of the forestry vehicle, so that the flow of lubrication to the saw blade is adjustable by a vehicle operator.

The harvester head allows easy adaption to different working conditions. The lubricant flow can be controlled via the cabin by the operator and avoids work effort to change the components of the lubricant pump to adapt the flow or volume.

Another invention is a forestry vehicle, comprising an arrangement for lubrication adapted for use on a harvester head with the forestry vehicle, comprising a saw unit having a movable saw blade and a lubrication pump, the pump having a fixed outlet diameter, the lubrication pump adapted to supply lubrication proportional to a movement angle of the saw blade, so that lubrication is supplied when the saw blade is moving outwards,
the arrangement further comprising a control valve in a lubrication supply line between the lubrication pump outlet and the saw blade, the control valve adapted to be controlled by an operator from a control surface on the forestry vehicle.

The forestry vehicle enables the operator to control the flow and volume of the lubricant that is provided to the saw blade and saw unit. The pump can be adapted to provide maximum flow and volume in general and the control valve is controlled in a manner that provides the optimum lubrication for the present conditions. The operator experiences reduced maintenance work and mechanical changes to the pump.

The invention and its embodiments are further described in the following descriptions, whereas
Figure 1 depicts a forestry vehicle;
Figure 2 shows a harvester head for a forestry vehicle;
Figure 3 shows a schematic for an embodiment.

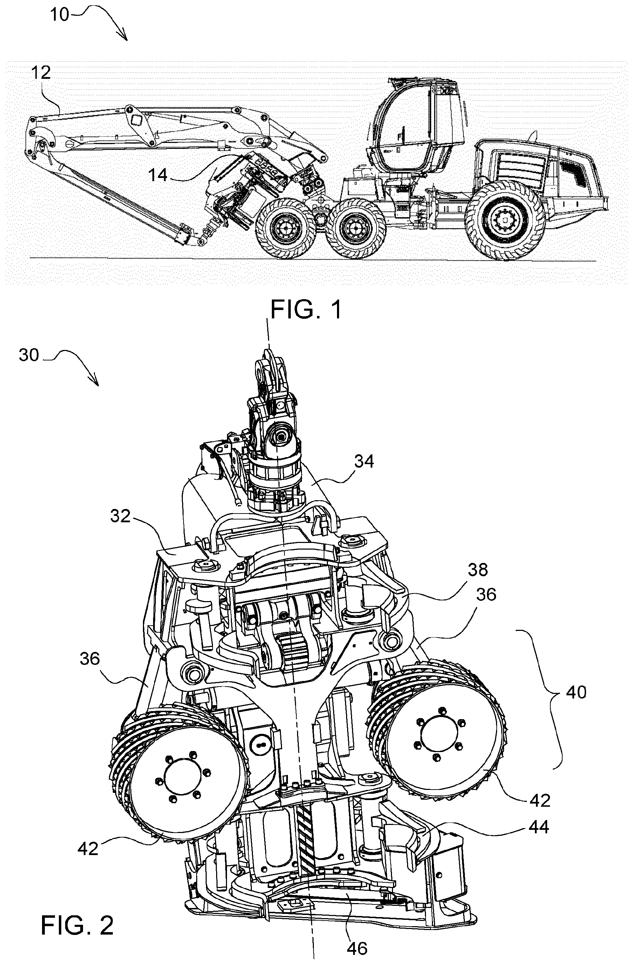

Figure 1 shows a forest harvester vehicle 10. It comprises usually of a front and rear chassis which are articulated and a driver cabin 16 for the operator. The vehicle 10 has boom assembly 12 to which a timber working device 14, e.g. a harvester head is attached. The boom assembly 12 is able to rotate and to tilt, and to extend and to rotate the harvester head 14 by the arrangement of the individual booms. For the felling and processing of a tree into logs, the operator extends and maneuvers the boom assembly 12 so that the harvester head 14 can close around the tree stem. Cabin 16 comprises control surfaces 18 for the operator to be able to control the vehicle and the work process. The harvester head comprises a saw unit used to cut the stem into logs. During the processing, the saw unit requires adequate lubrication reducing wear and increasing the lifetime of the components. A control valve in the lubrication supply line allow to adapt the lubrication flow and volume to match current conditions on the work site.

In line with Figure 2, a harvester head 30 is shown, which comprises of a chassis 32, a tilt bracket 34 to rotate the harvester head in a vertical movement. The harvester head 30 comprises movable feeding arms 36 which open and close feeding wheels 42 around a stem surface and transport the stem by rotation of the feeding wheels 42. Upper and lower knives 38, 44 are closed around the stem during processing to fix its position. A movable saw 46 is provided on a lower end in a saw box. The saw 46 has a non-use position, being inside the saw box and a use position being moved out of the saw box, cutting into the stem. The operator cuts the tree with the integrated saw blade 46 and further separates the stem into logs by driving the stem along the saw 46 using feeding apparatus 40. The feeding apparatus 40 comprises feeding arm 36 and feeding wheels 42 for pressing and moving the stem along a longitudinal axis of the harvester head 30. The control valve and the control line 20 from the cabin 16 allows to adjust the flow of lubricant to the saw 46 so that optimum conditions are ensured. The control line 20 is provided to reach to the harvester head 30, either by a cable connection or via electric wireless signal.

Each time the saw 46 is extended or moved into a cutting position, a cylinder acting as a pump is compressed pumping lubricant into the supply line 20. As the cylinder length is determined by the design and size of the saw box, the maximum pump size is generally provided so that the lubricant can be provided also for a worst case scenario. The control valve 70 is used to limit or maximize the flow to the present conditions so that the lubrication of all components is assured.

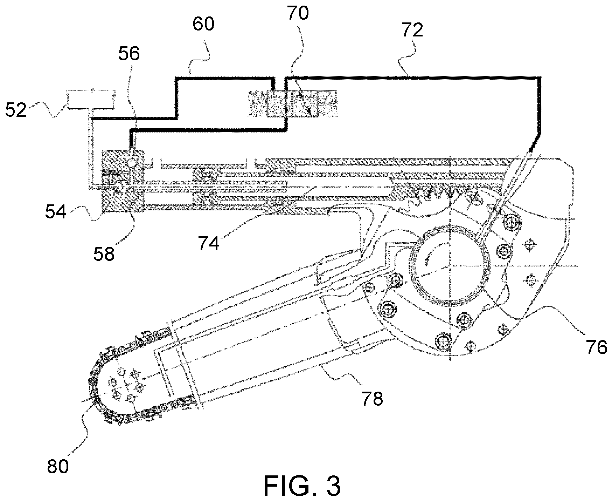

Figure 3 shows a schematic of the saw lubrication. A lubrication tank 52 is connected to an inlet valve 54, leading the lubrication fluid into a pump 74. The pump is activated during the swinging movement of the saw 46 and the swivel motor 76. The lubrication fluid is pressed through an outlet valve 56 into a supply line 72 leading to the saw bar 78 and the chain 80 providing lubrication depending on the movement of the pump cylinder.

The supply line 72 has a control valve 70 which is connected to a control line 20 or control port in the cabin 16 and a control surface 18. The operator can adapt the flow from the pump 74 to the saw unit 46 and the swivel motor 76 by adjusting the control valve 70. Any excessive lubrication fluid flows via a return line 60 back to the tank 52.

The invention enabled a flexible lubrication without the need to change the pump cylinder or the pump outlet 58. This usually requires disassembling the saw unit and change the pump to a different size and diameter. The required time and work effort which can be avoided by the present invention.

The pump 74 is dimensioned so that a maximum volume of lubrication fluid can be supplied to the saw 46. After passing through the pump outlet 58, the control valve 70 controls the predetermined or calculated lubrication flow depending on the operator control surface or an algorithm running on a CPU connected to the control surface in the cabin omitting any manual input from the operator, thus improving work performance and reducing fatigue and stress.

## Claims

1. Arrangement for lubrication adapted for use on a harvester head (14) with a forestry vehicle, comprising
a saw unit having a movable saw blade 46 and a lubrication pump (74), the pump (74) having a fixed outlet diameter,
the lubrication pump (74) adapted to supply lubrication proportional to a movement angle of the saw bar (78),
so that lubrication is supplied when the saw bar (78) is moving outwards,
the arrangement further comprising
a control valve (70) in a lubrication supply line (72) between the lubrication pump (74) outlet and the saw bar (78),
the control valve (70) adapted to be controlled by an operator from a control surface (18) on the forestry vehicle.

2. Arrangement according to claim 1, wherein the saw unit (46) comprises an inlet valve (54) between a lubrication tank (52) and the lubrication pump (74) and an outlet valve (56) between the lubrication pump (74) the control valve (70).

3. Arrangement according to any previous claims, wherein the control valve (70) is adapted to allow reflow of lubricant to the tank (52) or flow to the saw bar (78).

4. Arrangement according to any previous claims, wherein the arrangement further comprises a piston rod adapted to pump lubrication into the supply line (72), proportional to the movement of the saw bar (78).

5. Arrangement according to any previous claims, wherein the saw unit (46) is adapted to use a swivel motor (76) to move the saw bar (78).

6. Device for lubrication, adapted to be used on a saw unit (46) of a forestry vehicle, comprising
a saw lubrication supply line (72) with a control valve (70),
a control line (20) adapted to be used with a control surface (18) of the forestry vehicle, so that the flow of lubrication to the saw bar (78) is adjustable by a vehicle operator.

7. Harvester head (30) adapted to be used with or on a forestry vehicle, comprising
a saw lubrication supply line (72) with a control valve (70),
a control line (20) adapted to be used with a control surface (18) of the forestry vehicle, so that the flow of lubrication to the saw bar (78) is adjustable by a vehicle operator.

8. Forestry vehicle, comprising an arrangement for lubrication adapted for use on a harvester head (30) with the forestry vehicle, comprising
a saw unit (46) having a movable saw bar (78) and a lubrication pump (74), the pump (74) having a fixed outlet diameter,
the lubrication pump (74) adapted to supply lubrication proportional to a movement angle of the saw bar (78),
so that lubrication is supplied when the saw bar (78) is moving outwards,
the arrangement further comprising
a control valve (70) in a lubrication supply line (72) between the lubrication pump outlet (56) and the saw bar (78),
the control valve (70) adapted to be controlled by an operator from a control surface (18) on the forestry vehicle.
